# EUROPÄISCHE PATENTSCHRIFT

(11) **EP 0 612 930 B1**
(45) Veröffentlichungstag und Bekanntmachung des Hinweises auf die Patenterteilung: **05.08.1998**
(21) Anmeldenummer: 94100812.0
(22) Anmeldetag: 20.01.1994
(51) Int. Cl.: F16D 69/02, F16D 69/04

(54) **Reibblock für eine Scheibenbremse mit kohlenstoffaserverstärktem Kohlenstoff als Reibwerkstoffblock**
Carbon fibers reinforced carbon friction pad for disk brake
Bloc de friction en carbone renforcé par des fibres de carbone pour frein à disque

(30) Priorität: 22.01.1993 DE 9300851 U
(43) Veröffentlichungstag der Anmeldung: 31.08.1994
(73) Patentinhaber: Stahl, Christian, A-8403 Lebring (AT)
(72) Erfinder: Stahl, Christian, A-8403 Lebring (AT)
(74) Vertreter: Langmaack, Jürgen, Dipl.-Ing.

(56) Entgegenhaltungen:
- EP-A- 0 191 597
- EP-A- 0 503 625
- EP-A- 0 527 434
- DE-A- 3 540 290
- FR-A- 2 508 999

## Beschreibung

Die Verwendung von kohlenstoffaserverstärktem Kohlenstoff, nachstehend CFC genannt, als Reibwerkstoff für Fahrzeugbremsen, insbesondere Kraftfahrzeugbremsen, bereitete bisher erhebliche Probleme, da CFC als Reibwerkstoff für derartige Einsatzzwecke einen ungenügenden Kaltreibwert aufweist. In kaltem Zustand, d. h. bei Temperaturen von etwa 50°C und weniger, insbesondere aber bei Minustemperaturen, weist CFC in Verbindung mit einer metallischen Bremsscheibe praktisch keinen Reibwert auf, so daß es erst einer längeren Reibzeit bedarf, bis infolge der Erhitzung die geforderte Reibleistung erreicht wird. Andererseits weist CFC als Reibwerkstoff den besonderen Vorteil auf, daß auch bei hoher Reibbelastung, beispielsweise bei einer mehrfachen Abbremsung eines Fahrzeugs aus hohen Geschwindigkeiten und/oder bei steilen Bergabfahrten, kein sogenanntes "Belagfading" auftritt, da der Reibwert von CFC auch bei Temperaturen von mehreren 100° in der geforderten Höhe erhalten bleibt.

Der Erfindung liegt nun die Aufgabe zugrunde, einen Reibblock der eingangs bezeichneten Art zu schaffen, der durch eine Verbesserung des Kaltreibwertes den Einsatz für Fahrzeuge, insbesondere für Kraftfahrzeuge, gestattet.

Aus EP-A-0 503 625 ist ein Reibblock für eine Scheibenbremse bekannt, bei dem ein Reibmaterialblock auf seiner Rückenfläche mit einer dünnen, im Plasmaspritzverfahren aufgebrachten Beschichtung aus einem keramischen Material versehen ist. Bei der Verwendung von kohlefaserverstärktem Kohlenstoff als Reibwerkstoff wird an einen derart nur auf der Rückenfläche beschichteten Reibmaterialblock ein Rückenkörper aus Leichtmetall im Druckgußverfahren angegossen. Hierdurch soll der Wärmeeinfluß in den Rückenkörper verzögert werden, um beim Bremsvorgang auftretende Temperaturdifferenzen schneller auszugleichen, so daß der Reibmaterialblock insgesamt innerhalb kurzer Zeit gleichmäßig auf eine optimale Betriebstemperatur durch die Reibungswärme erwärmt wird. Der Reibblock der vorbekannten Art hat jedoch den Nachteil, daß bei einer Verwendung von kohlefaserverstärktem Material als Reibwerkstoff die umlaufenden Randflächen freiliegen, so daß aufgrund der Porosität des Werkstoffes im Randbereich Feuchtigkeit und Luft eintreten können, wobei im letzteren Fall bei hochbelasteten Bremsen, bei denen der Reibwerkstoff auf Temperaturen von mehreren 100° C erhitzt wird, Oxidationserscheinungen auftreten, die zu einer vorzeitigen Zerstörung des Reibblocks führen.

Diese Aufgabe wird erfindungsgemäß mit den Mitteln des Anspruchs 1 gelöst. Der Vorteil besteht darin, daß durch die erste Beschichtung, vorzugsweise einer Aluminiumschicht mit einer. Dicke von beispielsweise nur 0,1 mm, an der Anlagefläche eine Verteilung der durch die Reibung erzeugten Wärme über die gesamte Reibblockfläche erfolgt. Die dazwischenliegende Schicht aus Oxidkeramik, die einlagig ist, vorzugsweise jedoch dreilagig ausgeführt ist und je Einzelschicht eine Dicke von 0,2 mm aufweist, bietet den Vorteil, daß die durch die Reibleistung erzeugte Reibwärme nicht unmittelbar über die Rückenfläche des Reibwerkstoffblockes in eine dahinter angeordnete Trägerplatte, Stützplatte oder dergl. aus Metall abfließt. Die darüber liegende zweite Schicht aus einem Leichtmetall, vorzugsweise Aluminium mit einer Schichtdicke von beispielsweise 0,2 mm, dient als Abdeckung für die Oxidkeramikbeschichtung. Dadurch, daß die beiden Leichtmetallschichten den Reibwerkstoffblock randseitig abdecken, erfolgt eine Abdichtung der Oberfläche, so daß hier ein Feuchtigkeitseintritt unterbunden ist. Ein derart ausgebildeter Reibwerkstoff kann lose in Verbindung mit eine lose in die Zange eingesetzten Trägerplatte verwendet werden. Es ist aber auch möglich, einen derartigen Reibwerkstoffblock in üblicherweise durch Klebung mit einer Trägerplatte fest zu verbinden.

Eine bevorzugte Anwendung der Erfindung ist in den Merkmalen des Anspruchs 2 angegeben. Da der CFC-Reibwerkstoff eine so hohe Festigkeit, insbesondere eine hohe Biegefestigkeit aufweist und im Vergleich zu herkömmlichen Reibstoffen nur um ein geringes Maß zusammendrückbar ist, bietet sich hierbei die Möglichkeit, den Reibwerkstoffblock mit einer Druckverteilungsplatte aus Stahl lose in die zugehörige Bremszange einzulegen, so daß lediglich eine Festlegung über entsprechende Haltemittel an der Bremszange oder an der Druckverteilungsplatte notwendig ist. Dies bietet gegenüber den herkömmlichen Reibblöcken, bei denen der Reibwerkstoff mit einer Druckverteilungs- bzw. Trägerplatte fest durch Formschluß oder Klebung verbunden ist, den Vorteil, daß bei einem Wechsel nach Verschleiß des Reibwerkstoffs lediglich der Reibwerkstoffblock aus der Zange herausgenommen zu werden braucht, während die Trägerplatte wieder verwendet werden kann. Hierdurch wird eine Entsorgung sehr vereinfacht.

Eine Form der Ausbildung der Haltemittel ist in Anspruch 3 angegeben. Eine andere Form der Ausbildung der Haltemittel ist in Anspruch 4 angegeben. Letztere Ausbildungsform hat den Vorteil, daß zwischen dem Reibwerkstoffblock einerseits und der Druckverteilungsplatte andererseits durch die Anordnung von ineinander eingreifenden Vorsprüngen und Vertiefungen eine formschlüssige Verbindung in Reibrichtung gegeben ist, so daß hier bis zum Erreichen der Mindestdicke für den Reibwerkstoff eine einwandfreie Abstützung in Wirkungsrichtung der Reibkraft gegeben ist. Die Verbindung bleibt jedoch leicht lösbar.

Besonders vorteilhafte Zusammensetzungen des Reibmaterials sind in den Ansprüchen 5 und 6 angegeben.

Die Erfindung wird nachstehend anhand schematischer Zeichnungen näher erläutert. Es zeigen:
- Fig. 1: eine Schnittdarstellung durch einen Reibwerkstoffblock,
- Fig. 2: eine Aufsicht auf den Reibwerkstoffblock nach Fig. 1 auf die Reibfläche mit Ausnehmungen,
- Fig. 3: eine andere Gestaltung der Ausnehmungen,
- Fig. 4: in einer Sprengdarstellung einen Reibwerkstoffblock mit zugehöriger Druckverteilungsplatte.

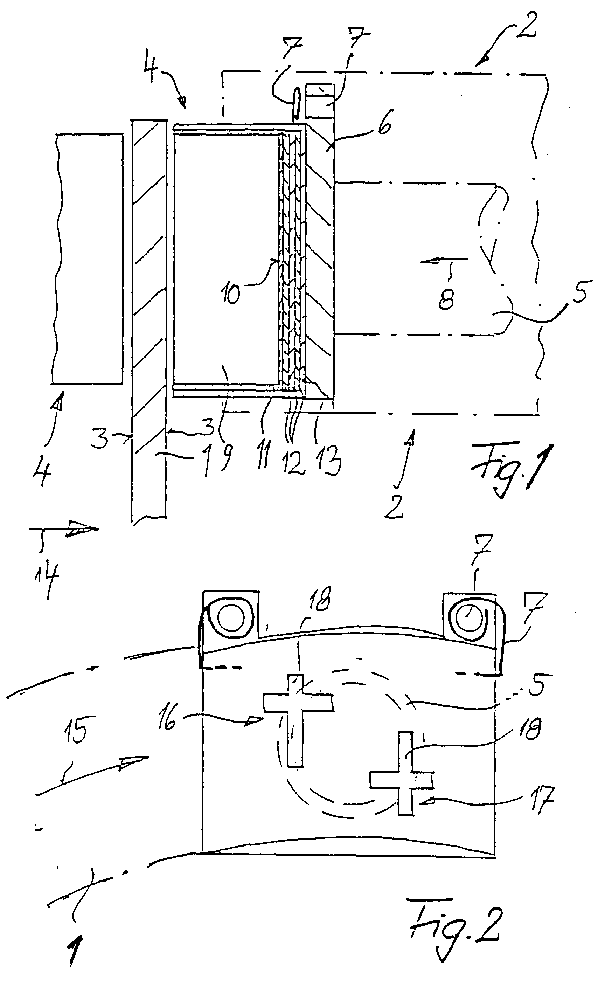

Fig. 1 zeigt in einem Teilschnitt ausschnittweise eine Scheibenbremse, die im wesentlichen aus einer Bremsscheibe 1 und einer Bremszange 2 besteht, von der jedoch lediglich eine Seite dargestellt ist. Die Scheibenbremse ist so ausgebildet, daß auf beiden Reibflächen 3 der Bremsscheibe 1 jeweils ein Reibblock 4 vorgesehen ist, wobei über hydraulische Mittel unterschiedlicher Bauart beim Bremsvorgang die Reibblöcke 4 von beiden Seiten gegen die Reibflächen 3 der Bremsscheibe 1 gepreßt werden. Bei einer sogenannten Festsattelbremse sind den Reibblöcken beider Seiten Bremskolben 5 zugeordnet, an denen der Reibblock 4 unter Zwischenlage einer Trägerplatte 6 aus Stahl anliegt. Über entsprechende Haltemittel 7 in Form von Ösen oder Ausstanzungen sind Reibblock 4 und Trägerplatte 6 mittels eines hier nicht näher dargestellten sicherbaren Bolzens am Bremssattel in Umfangsrichtung der Bremsscheibe formschlüssig, in Bewegungsrichtung des Bremskolbens 5 (Pfeil 8) verschiebbar gelagert.

Der Reibblock 4 wird, wie aus Fig. 1 ersichtlich, im wesentlichen durch einen Reibwerkstoffblock 9 gebildet, der aus einem kohlefaserverstärktem Kohlenstoff gebildet ist. Die Rückenfläche 10 des Reibwerkstoffblockes ist mit einer ersten Schicht 11 aus Aluminium, sowie einer dreilagigen Beschichtung 12 aus einer Oxidkeramik sowie einer zweiten Schicht 13 wiederum aus Aluminium abgedeckt. Während die oxidkeramische Beschichtung sich nur über die Rückenfläche 10 erstreckt, überdecken die metallischen Beschichtungen 11 und 13 auch die Umfangsfläche des Reibwerkstoffblockes 9, so daß diese Oberfläche über die Beschichtung "abgedichtet ist, so daß der Zutritt von Feuchtigkeit oder dergl. in den Reibwerkstoff unterbunden ist.

In Fig. 2, die eine Ansicht des Reibblockes 4 in Richtung des Pfeiles 14 in Fig. 1 zeigt, ist die Reibfläche des Reibblockes 4 in einer Aufsicht dargestellt. Die davorliegende Bremsscheibe 1 ist hier nur angedeutet, wobei durch den Pfeil 15 die Hauptdrehrichtung der Bremsscheibe angegeben ist. Die Anlagekontur des Bremszylinders 5 ist durch den strichpunktierten Kreis angedeutet.

Wie Fig. 2 erkennen läßt, ist die Reibfläche mit zwei Ausnehmungen 16 und 17 versehen, die jeweils durch zwei sich kreuzende Schlitze 18 gebildet werden. Die so gebildeten Ausnehmungen sind nur in Richtung auf die Reibfläche 3 der Bremsscheibe 1 hin offen und in ihrer Tiefe so bemessen, daß sie in etwa der maximal zulässigen Verschleißdicke des Reibwerkstoffblockes 9 entspricht. Die Anordnung ist hierbei so getroffen, daß der Kreuzungspunkt der beiden Schlitze jeweils im Bereich der Projektion der Anlagefläche des Bremszylinders 5 liegt. In bezug auf die durch den Pfeil 15 angegebene Drehrichtung der Bremsscheibe ist die Anordnung so getroffen, daß die beiden Ausnehmungen 16 und 17 versetzt zueinander angeordnet sind, so daß die einlaufseitige Ausnehmung 16 dem Außenrand und die auslaufseitige Ausnehmung 17 dem Innenrand der Bremsscheibe 1 benachbart angeordnet ist.

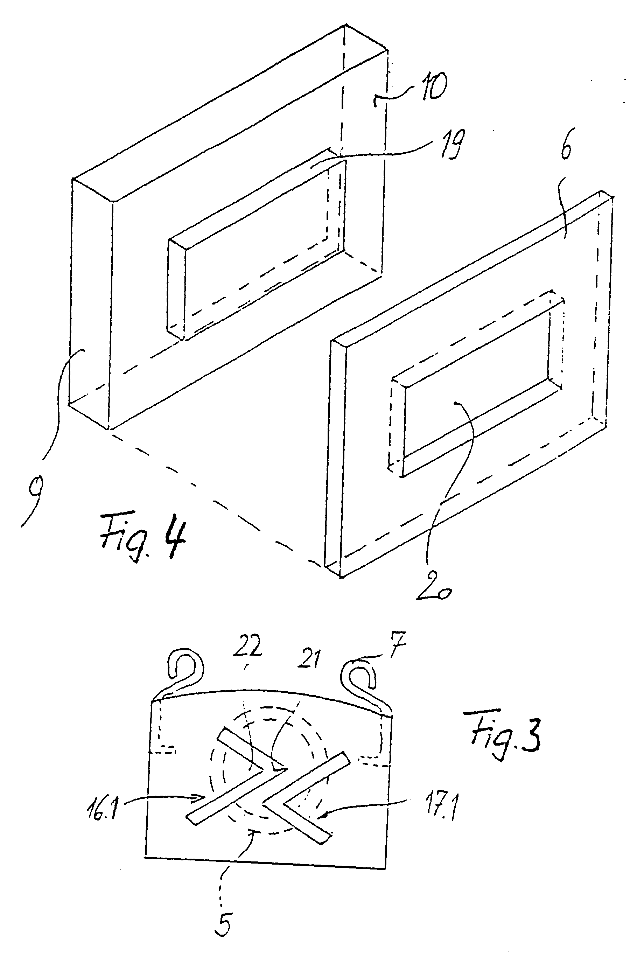

Die Aufsicht gem. Fig. 3 zeigt eine andere vorteilhafte Gestaltung der Ausnehmungen 16.1 und 17.1. Jede der beiden Ausnehmungen ist durch winkelförmig ausgebildete Schlitze 18 gestaltet und mit gegeneinander gerichteten Spitzen 21 in der Reibfläche versetzt zueinander angeordnet. Die den innenliegenden Bereich der Bremsscheibe überdeckende Ausnehmung 17.1 ist mit ihrer Spitze 21 gegen die Hauptdrehrichtung der Bremsscheibe (Pfeil 15) ausgerichtet. Die Anlagekontur des Bremszylinders 5 ist angedeutet. Durch die Ausnehmungen 16.1 und 17.1 werden zwei zungenartige Bereiche 22 gebildet, die im Druckbereich des Bremszylinders liegen, so daß eine, wenn auch sehr geringe Ausgleichsmöglichkeit für Wärmedehnungen des Reibmaterials gegeben ist.

In Fig. 4 ist in einer Sprengdarstellung eine andere Art der Verbindung zwischen Reibwerkstoffblock 9 und der Druckverteilungsplatte 6 dargestellt. Bei dieser Bauform weist der Reibwerkstoffblock 9 auf seiner Rückenfläche 10 einen Vorsprung 19 auf, dem in der Druckverteilungsplatte 6 eine entsprechende Vertiefung 20, hier in Form einer Durchstanzung zugeordnet ist. Im übrigen entspricht der Reibblock 9 bei der Ausführungsform gem. Fig. 3 dem anhand der Fig. 1 und 2 beschriebenen Aufbau hinsichtlich der Beschichtung der Rückenfläche und hinsichtlich der Anordnung der Ausnehmungen 16 und 17. Bei dieser Ausführungsform werden also die Haltemittel für den Reibblock durch den Vorsprung 19 in seiner Verbindung mit der Ausnehmung bzw. Durchstanzung 20 gebildet. Die Anordnung kann auch umgekehrt getroffen werden, beispielsweise durch entsprechende, gegen die Rückenfläche 10 des Reibwerkstoffblockes 9 vorspringende Durchprägungen der Druckverteilungsplatte 6, der entsprechende Vertiefungen in der Rückenfläche 10 des Reibwerkstoffblockes 9 zugeordnet sind. Bei der in Fig. 4 wiedergegebenen Befestigungskonzeption können selbstverständlich Haltemittel in Form von Ösen oder dergl. entfallen.

Der den Reibwerkstoff bildende kohlenstoffaserverstärkte Kohlenstoff ist auf der Basis kurzer Fasern, im übrigen aber in üblicher Weise aufgebaut. Speziell für Fahrzeugbremsen ist dieser CFC-Reibwerkstoff jedoch dahingehend modifiziert, daß ihm feinteiliger Koks in einer Körnung von etwa 20 µ/m zugegeben ist und zwar in einer Menge zwischen 1 und 10-Gewichtsprozent, vorzugsweise in einer Menge zwischen 2 und 4-Gewichtsprozent. Hierdurch wird der Kaltreibwert gegenüber herkömmlichen CFC-Reibwerkstoffen verbessert bei sonst gleichen Eigenschaften hinsichtlich der mechanischen Festigkeit und der Temperaturbeständigkeit.

Die beschriebene und dargestellte Konzeption kann nicht nur für Kraftfahrzeuge sondern vorteilhaft auch für Scheibenbremsen an Motorrädern und Fahrrädern eingesetzt werden. Hier ist nur die Form des Reibblocks an die Geometrie der jeweiligen Bremse anzupassen. Die Art der Verbindung zwischen Reibblock und Haltemittel in Form einer rahmenförmigen Platte ist für Motorrad- und/oder Fahrradbremsen wegen der geringen Dicke vorteilhaft.

## Patentansprüche

1. Reibblock für eine Scheibenbremse mit kohlenstoffaserverstärktem Kohlenstoff als Reibwerkstoffblock,
**dadurch gekennzeichnet**, daß die Rückenfläche (10) des Reibwerkstoffblockes (9) in einem Schmelzspritzverfahren fest beschichtet ist mit
- einer ersten Schicht (11) aus einem Leichtmetall,
- wenigstens einer weiteren Schicht (12) aus einem oxidkeramischen Werkstoff
- sowie einer zweiten Schicht (13) aus einem Leichtmetall,
und
daß zumindestens die erste und die zweite Metallschicht (11, 13) auch die umlaufende Randfläche des Reibwerkstoffblockes überdecken.

2. Reibblock nach Anspruch 1, dadurch gekennzeichnet, daß der Reibwerkstoffblock (9) über Haltemittel (7) zur Festlegung an der zugehörigen Bremszange versehen ist und lösbar mit der Rückenfläche (10) zugeordneten Druckverteilungsplatte (6) in Verbindung steht.

3. Reibblock nach Anspruch 2, dadurch gekennzeichnet, daß die Haltemittel (7) als ösen ausgebildet und formschlüssig mit dem Reibwerkstoffblock (9) verbunden sind.

4. Reibblock nach Anspruch 2, dadurch gekennzeichnet, daß die Haltemittel durch Vorsprünge (19) und/oder Vertiefungen der Rückenfläche (10) des Reibwerkstoffblocks (9) einerseits und Vorsprünge und/oder Vertiefungen (20) der Druckverteilungsplatte (6) andererseits gebildet werden.

5. Reibblock nach einem der Ansprüche 1 bis 4, dadurch gekennzeichnet, daß in dem aus kohlefaserverstärktem Kohlenstoff bestehenden Grundmaterial des Reibwerkstoffs feinkörniger Koks in einer in etwa gleichmäßigen Verteilung eingebunden ist.

6. Reibblock nach einem der Ansprüche 1 bis 5, dadurch gekennzeichnet, daß die verstärkenden Kohlefasern eine kurze Faserlänge aufweisen.

## Claims

1. A friction pad for a disc brake with carbon fibre-reinforced carbon as friction material pad,
characterised in that the rear surface (10) of the friction material pad (9) is securely coated in a meltspraying operation with
- a first layer (11) of a lightweight metal,
- at least one additional layer (12) of an oxide-ceramic material,
- and a second layer (13) of a lightweight metal,
and that at least the first and the second layers of metal (11, 13) also cover the circumambient edge surface of the friction material pad.

2. A friction pad according to Claim 1, characterised in that the friction material pad (9) is provided for securing to the associated brake pincers by holding means (7) and is detachably connected to a pressure distribution plate (6) associated with the rear surface (10).

3. A friction pad according to Claim 2, characterised in that the holding means (7) are designed as eyes and are positively connected to the friction material pad (9).

4. A friction pad according to Claim 2, characterised in that the holding means are formed by projections (19) and/or recesses on the rear surface (10) of the friction material pad (9) on one hand and projections and/or recesses (20) on the pressure distribution plate (6) on the other hand.

5. A friction pad according to one of Claims 1 to 4, characterised in that fine-grained coke in an approximately regular distribution is incorporated in the base material of the friction material consisting of carbon fibre-reinforced carbon.

6. A friction pad according to one of Claims 1 to 5, characterised in that the reinforcing carbon fibres have a short fibre length.

## Revendications

1. Bloc de friction pour frein à disque comportant un bloc de matériau de friction en carbone renforcé par des fibres de carbone,
caractérisé en ce que,
la surface arrière (10) du bloc de matériau de friction (9) est revêtue solidairement au moyen d'un procédé de pulvérisation à chaud
d'une première couche (11) d'un métal léger,
d'au moins une couche supplémentaire (12) d'un matériau céramique à base d'oxyde
ainsi que d'une deuxième couche (13) d'un métal léger, et que, au moins la première et la deuxième couche métallique (11, 13) recouvrent également la surface de bord périphérique du bloc de matériau de friction.

2. Bloc de friction selon la revendication 1, caractérisé en ce que le bloc de matériau de friction (9) est muni de moyens de support (7) pour la fixation à la mâchoire de frein correspondante et est en contact amovible avec la plaque (6) de répartition de la compression disposée au niveau de la surface arrière (10).

3. Bloc de friction selon la revendication 2, caractérisé en ce que les moyens de support (7) sont formés en oeillets et sont liés par engagement positif au bloc de matériau de friction (9).

4. Bloc de friction selon la revendication 2, caractérisé en ce que les moyens de support sont formés, d'un côté, en saillies (19) et/ou en creux de la surface arrière (10) du bloc de matériau de friction et, de l'autre côté, en saillies (19) et/ou en creux (20) de la plaque (6) de répartition de la compression.

5. Bloc de friction selon l'une des revendications 1 à 4, caractérisé en ce que du coke à grains fins est réparti de façon uniforme dans la matrice du matériau de friction constituée de carbone renforcé par des fibres de carbone.

6. Bloc de friction selon l'une des revendications 1 à 5, caractérisé en ce que les fibres de carbone de renfort présentent une longueur de fibre courte.
